# EUROPEAN PATENT SPECIFICATION

(11) **EP 1 713 162 B1**
(45) Date of publication and mention of the grant of the patent: **14.11.2012**
(21) Application number: 06003465.9
(22) Date of filing: 21.02.2006
(51) Int. Cl.: D04B 15/48, H02K 21/16, H02K 21/24, D03D 47/36, H02K 29/08

(54) **Negative yarn feeder for textile machines and the like**
Garnliefervorrichtung für Textilmaschinen und dergleichen
Fournisseur de fil pour machines textiles et similaires

(30) Priority: 15.04.2005 IT TO20050256
(43) Date of publication of application: 18.10.2006
(73) Proprietor: L.G.L. Electronics S.p.A., 24024 Gandino (Bergamo) (IT)
(72) Inventor: Gotti, Luca, 24021 Albino (BG) (IT); Castelli, Rosario, 24024 Gandino (BG) (IT); Gotti, Andrea, 24021 Albino (BG) (IT)
(74) Representative: Spandonari, Carlo

(56) References cited:
- EP-A1- 0 182 702
- WO-A1-99/08363
- DE-U1- 8 325 441

## Description

The present invention relates to a negative yarn feeder for textile machines and the like, particularly of the type provided with a voltage-controlled or current-controlled motor.

As known, the weft feeders for textile machines comprise a stationary drum on which a motorized swivel arm winds a plurality of yarn loops forming a weft reserve. Upon request from the loom, the loops are unwound from the drum, then pass through a breaking member which maintains the tension of the yarn at a value suitable to the weaving process, and finally are fed to the loom.

The motor that drives the swivel arm is driven by an electronic power supply unit consisting of a bridge of electronic switches controlled by a control unit, which processes various signals from sensors incorporated in the feeder, such as sensors for measuring the weft reserve, yarn-unwinding sensors, sensors which measure the current signal deriving from the driving of the motor and/or the feedback signals from speed sensors and/or position sensors associated to the motor, etc. On the basis of such signals, the control unit cyclically closes the switches of the electronic power supply unit to control the motor speed in order to maintain the weft reserve on the drum substantially constant. The above control units are substantially capable of operating in real time by means of circuits which implement voltage/current, nested control loops, which may be speed-controlled loops or position-controlled loops.

The negative yarn feeders of the prior art utilize stepping motors or, preferably, brushless motors comprising a hollow, cylindrical stator provided with field windings received in a fine groove pattern cut in the inner surface of the stator.

However, as well known to the persons skilled in the art, very expensive and accurate machinings are required to carry out the above arrangement of grooves and windings, mainly in consideration of the small size of the motors used for yarn feeders, which are about 40 to 70 mm in diameter. Moreover, this arrangement makes it difficult to install position sensors, such as Hall sensors, within the stator, as required to subject the motor to a speed/position feedback control.

In the attempt of overcoming the above drawback concerning the installation of the Hall sensors, it is known to arrange a plurality of small magnets on the outer surface of the flywheel of the motor. A stationary Hall sensor arranged near the flywheel detects the magnets as they pass, thereby generating a rotor positon signal.

However, a drawback of the above system is that it does not provide the absolute electric position of the rotor with respect to the stator, which information is required to start the motor into a desired direction of rotation, so that additional sophisticated control systems are required which complicate the structure of the control electronics, both in terms of software and hardware, and also necessitate auxiliary starting procedures that delay the starting of the motor of several seconds.

In addition, the presence of the magnets on the flywheel of the motor increases the moment of inertia of the flywheel, with a consequent reduction of the global efficiency.

Furthermore, the use of brushless motors of the above type in negative yarn feeders causes the driving torque to be affected by so-called "ripple" phenomena. Such phenomena limit the passband of the control system, thereby affecting the accuracy of the yarn-winding process with consequent flaws in the evenness of the fabric or mesh. As a further drawback, the torque ripple causes the motor to deliver a lower driving torque, with a consequent increase of the current consumption that finally results in a further reduction of the global efficiency.

It is now a main object of the present invention to provide a negative yarn feeder having low manufacturing costs, in which the the position and the speed of the swivel arm are accurately controlled without affecting the global efficiency of the system, and in which the motor can be directly started to a desired direction without making significant changes in the structure of the control electronics.

It is another object of the invention to provide a negative yarn feeder in which the torque ripple is considerably reduced, or even deleted, with respect to the known feeders.

The above objects and other aims and advantages, which will better appear below, are achieved by a negative yarn feeder having the features recited in claim 1, while other advantageous features are stated in the other claims.

A few preferred embodiments of the invention will be now described with reference to the attached drawings, wherein:
Fig. 1 is a general diagram of a negative yarn feeder of the type to which the invention is referred;
Fig. 2 is a view in transverse, cross-section of the motor incorporated in the feeder according to a first preferred embodiment of the invention;
Fig. 3 is a perspective view of the motor incorporated in the feeder according to a second preferred embodiment of the invention;
Fig. 4 is a view in tranverse, cross-section of the stator of the motor of Fig. 3;
Fig. 5 is a diagram showing the driving torque of the motor as a function of the angular position with different values of the armature current;
Fig. 6 is a view in transverse, cross-section of the motor incorporated in the feeder according to a third preferred embodiment of the invention.

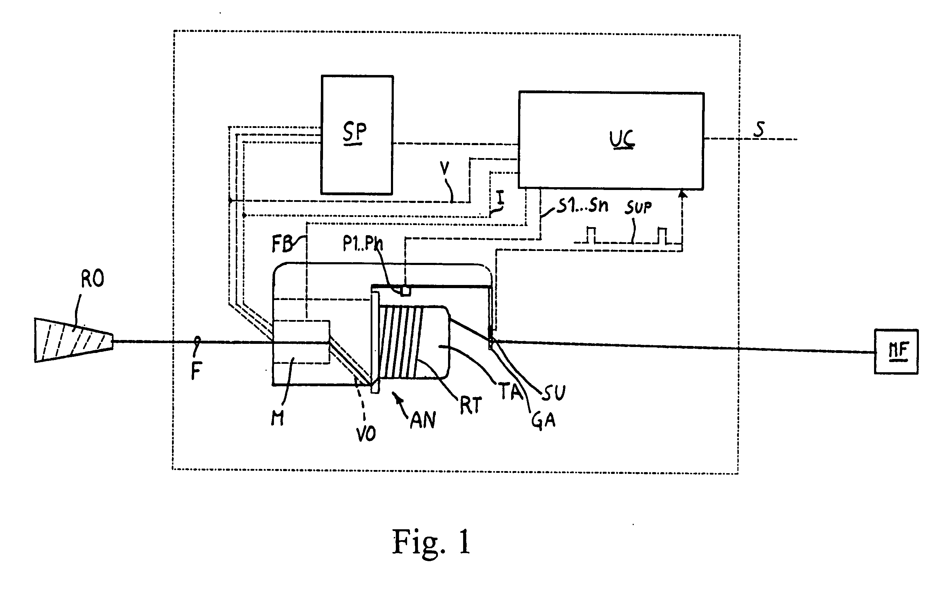

With initial reference to Fig. 1, a general negative yarn feeder AN draws yarn F from a spool RO and feeds the yarn, at a regulated speed, to a machine MF, such as a loom, a knitting machine, a spooler, and the like. Yam-feeder AN comprises a stationary drum TA on which a swivel arm VO, which is driven by a motor M for drawing the yarn from spool RO, winds a plurality of yarn loops forming a weft reserve RT. Upon request from textile machine MF, yarn F is unwound from the drum and passes through a guide eyelet GA coaxial to the drum.

Motor M is a permanent-magnet, synchronous brushless motor driven by an electronic power supply unit via a bridge of electronic switches SP. A control unit UC receives signals SR1..SRn from one ore more sensors which measure the weft reserve P1...Pn, and/or pulses SUP from a yarn-unwinding sensor SU, as well as current signals I and/or voltage signals V from the motor, feedback signals FB from position sensors associated to the motor, as will be better described below, as well as general external signals S. On the basis of these signals, control unit UC generates a sequence of commands C which drive switching bridge SP to control the rotation of the swivel arm in order to maintain the weft reserve RT substantially constant.

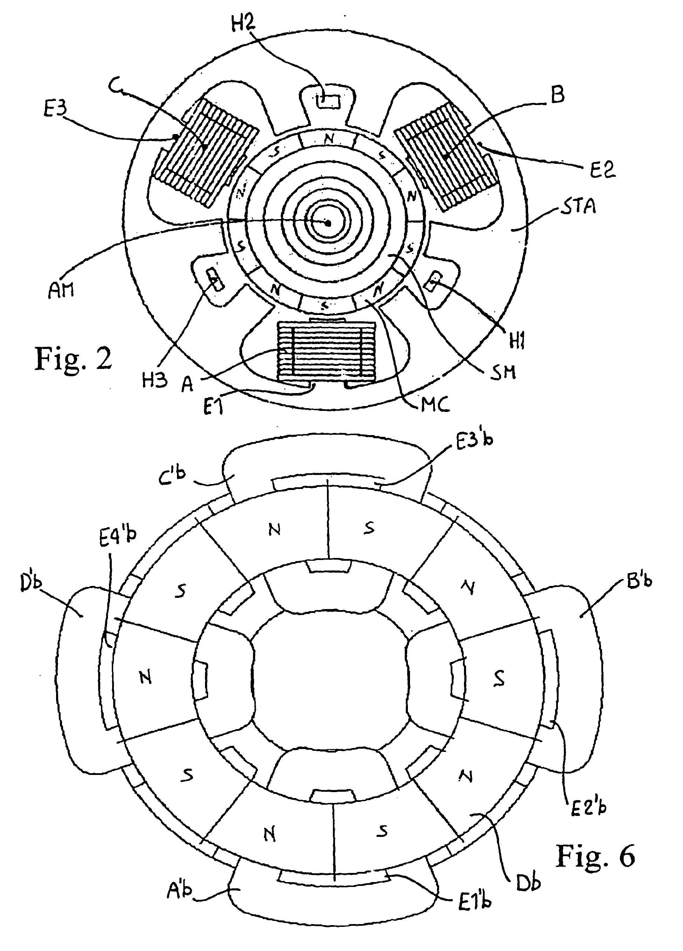

Having now reference to Fig. 2, motor M according to a first preferred embodiment of the invention is provided with a stator STA consisting of a hollow cylindrical housing having nine elongated pole shoes which radially project inwards, three of which E1, E2, E3, are equally spaced at 120° from each other and support respective excitation coils A, B, C. The rotor of the motor consists of a thin cylindrical magnet MC that is coaxially supported on the driving shaft AM via a support SM. Cylindrical magnet MC is polarized radially with alternating poles north N and south S. The two side-by-side pole shoes of each pair without coils have a respective Hall sensor H1, H2, H3, arranged therebetween and connected to send position signals to control unit UC.

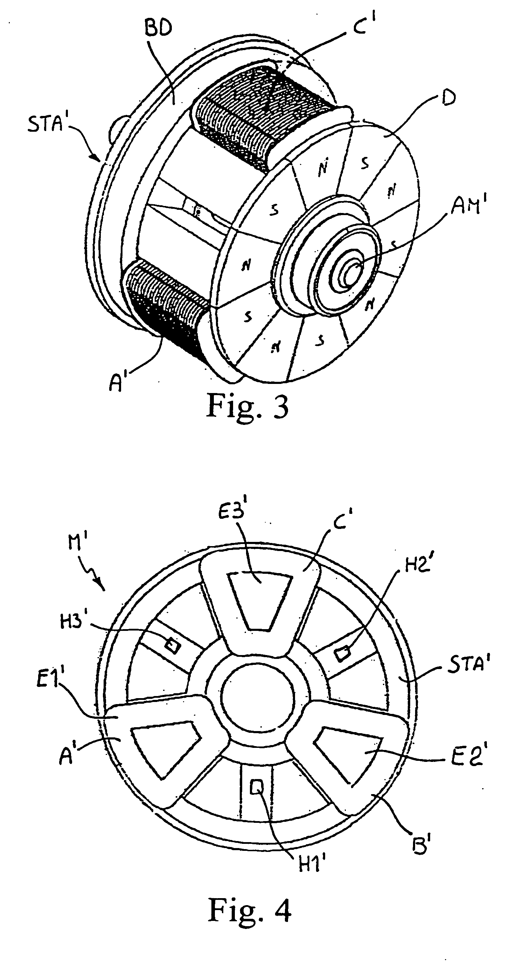

According to a second preferred embodiment of the invention, shown in Figs. 3 and 4, motor M' has a stator STA' in the shape of a substantially cylindrical, hollow housing, with a disc-shaped base BD and nine elongated pole shoes rising from the base in a direction parallel to the axis of the base, each piece being in the shape of a longitudinal part of cylinder. Three of said pieces E1', E2', E3' are equally spaced at 120° from each other and support respective excitation coils A', B', C'. The rotor consists of a driving shaft AM' having a coaxial, disc-shaped magnet D keyed thereto, which is polarized longitudinally with alternating poles north N and south S. Magnet D is arranged in front of the coils near the free ends thereof. The two side-by-side pole shoes of each pair without coils have a respective Hall sensor H1', H2', H3', arranged therebetween and connected to send position signals to control unit UC.

With both the above arrangements, the magnetic member, i.e., the cylinder or the disc, may have four or five pairs of pole shoes (five in the figures), or a number of pairs that is a multiple of four or five, depending on the design requirements concerning the speed control or position control of the motor, as known to the person skilled in the art.

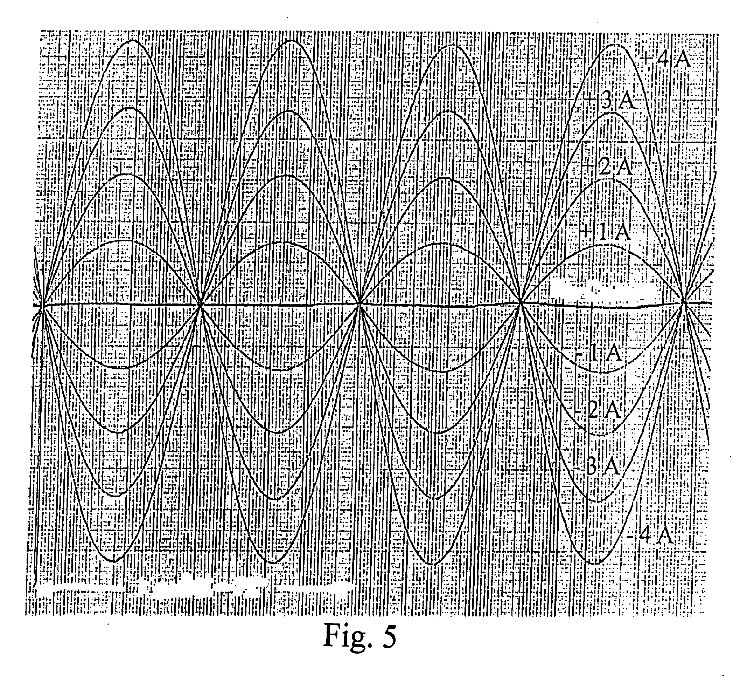

The diagram of Fig. 5 shows the driving torque as a function of the angular position with different armature currents (in Ampere), with the motor subjected to a trapezoidal driving. As the person skilled in the art will appreciate, the curves have a synusoidal shape and the residual torque, i.e., the resisting torque measured at zero-current, is very low.

In a third embodiment of the invention, shown in Fig. 6, the construction of the motor is similar to the second embodiment but the motor is biphase and has a stator provided with eight pole shoes, four of which E1' b, E2'b, E3'b, E4'b, are equally spaced at right angles from each other and support respective excitation coils A'b, B'b, C'b, D'b. The magnetic disc Db has five pole shoes.

With a motor according to the invention, the excitation coils do not need to be wound directly on the pole shoes of the stator, as required with the traditional motors. On the contrary, the coils can be wound separately and then installed within the stator, with an enhanced ease of installation.

Furthermore, since the Hall sensors are arranged in the angular gaps between the coils, they do not require any additional housing to be installed, with consequent opportunity of manufacturing small-sized motors at low cost.

A preferred embodiment of the invention has been described herein, but of couse many changes may be made within the scope of the inventive concept.

## Claims

1. A yarn-feeder for textile machines, comprising a stationary drum (TA) and a swivel arm (VO) that is pivotally supported about the axis of the drum and is operatively connected to a permanent-magnet, synchronous brushless motor (M) controlled by a control unit (UC) via an electronic power supply unit for winding yam loops upon the drum, said motor (M, M') comprising a stator (STA, STA') consisting of a substantially cylindrical, hollow housing, and a rotor comprising a magnetic member having a circular profile with alternating poles, which is coaxially supported on the driving shaft (AM, AM') near the coils, **characterized in that** said hollow housing has nine elongated pole shoes, three of which (E1-E3, E1'-E3') are equally spaced at 120° from each other and support respective excitation coils (A, B, C, A', B', C') wound thereon, the remaining six pole shoes being divided in pairs of side-by-side pole shoes, each of which pair is arranged between two respective pole shoes provided with coils, and **in that** a Hall sensor (H1-H3, H1', H3') is arranged near the magnetic member in the angular gap between the pole shoes of each of said pairs and is connected to send position signals to said control unit.

2. The yarn-feeder of claim 1, **characterized in that** said magnetic member consists of a thin-walled cylinder (MC) made of a radially polarized, magnetic material with alternating poles, and said pole shoes (E1, E2, E3) radially project inwards from the stator about the axis of rotation of the rotor.

3. The yarn-feeder of claim 1, **characterized in that** said magnetic member consists of a flat disc (D) made of a magnetic material that is polarized longitudinally with alternating poles in the direction of its thickness, and said pole shoes (E1'-E3', E1'bE4'b) project parallel to the axis of rotation of the rotor.

4. The yarn-feeder of any of claims 1 to 3, **characterized in that** said magnetic member has four pairs of pole shoes.

5. The yarn-feeder of claim 4, **characterized in that** said magnetic member has a number of pairs of pole shoes that is a multiple of four.

6. The yarn-feeder of any of claims 1 to 3, **characterized in that** said magnetic member has five pairs of pole shoes.

7. The yarn-feeder of claim 6. **characterized in that** said magnetic member has a number of pairs of pole shoes that is a multiple of five.

## Patentansprüche

1. Garnliefervorrichtung für Textilmaschinen, mit einer stationären Trommel (TA) und einem Schwenkarm (VO), der schwenkbar um die Achse der Trommel gelagert und betriebsfähig mit einem bürstenlosen Permanentmagnet-Synchronmotor (M) verbunden ist, der über eine elektronische Stromzufuhreinheit mittels einer Steuereinheit (UC) zum Wickeln von Garnschlaufen auf die Trommel gesteuert ist, wobei der Motor (M, M') einen Stator (STA, STA'), der aus einem im Wesentlichen zylindrischen, hohlen Gehäuse, und einen Rotor aufweist, der ein magnetisches Bauteil umfasst, welches ein kreisförmiges Profil mit alternierenden Polen hat, das koaxial auf der Antriebswelle (AM, AM') nahe den Spulen gelagert ist, **dadurch gekennzeichnet, dass** das hohle Gehäuse neun längliche Polschuhe hat, von denen drei (E1-E3, E1'-E3') gleichmäßig voneinander um 120° beabstandet sind und zugehörige, darauf gewickelte Erregerspulen (A, B, C, A', B', C') tragen, wobei die verbleibenden sechs Polschuhe in Paare nebeneinander angeordneter Polschuhe aufgeteilt sind, von denen jedes Paar zwischen jeweils zwei mit Spulen versehenen Poischuhen angeordnet ist, und dass ein Hallsensor (H1-H3, H1', H3') nahe dem magnetischen Bauteil in dem Winkelspalt zwischen den Polschuhen jedes der Paare angeordnet und dazu angeschlossen ist, Positionssignale an die Steuereinheit zu senden.

2. Garnliefervorrichtung nach Anspruch 1,
**dadurch gekennzeichnet, dass** das magnetische Bauteil aus einem dünnwandigen Zylinder (MC) besteht, der aus einem radial polarisierten magnetischen Material mit alternierenden Polen hergestellt ist, und dass die Polschuhe (E1, E2, E3) um die Drehachse des Rotors von dem Stator radial einwärts ragen.

3. Garnliefervorrichtung nach Anspruch 1,
**dadurch gekennzeichnet, dass** das Magnetbauteil aus einer flachen Scheibe (D) besteht, die aus einem magnetischen Material hergestellt ist, welches in Längsrichtung mit alternierenden Polen in der Richtung ihrer Dicke polarisiert ist, und dass die Polschuhe (E1'-E3', E1'b-E4'b) parallel zur Drehachse des Rotors hervorstehen.

4. Garnliefervorrichtung nach einem der Ansprüche 1 bis 3,
**dadurch gekennzeichnet, dass** das magnetische Bauteil vier Polschuhpaare hat.

5. Garnliefervorrichtung nach Anspruch 4,
**dadurch gekennzeichnet, dass** das magnetische Bauteil eine Anzahl Polschuhpaare hat, die ein Vielfaches von vier ist.

6. Garnliefervorrichtung nach einem der Ansprüche 1 bis 3,
**dadurch gekennzeichnet, dass** das magnetische Bauteil fünf Polschuhpaare hat.

7. Garnliefervorrichtung nach Anspruch 6,
**dadurch gekennzeichnet, dass** das magnetische Bauteil eine Anzahl Polschuhpaare hat, die ein Vielfaches von fünf ist.

## Revendications

1. Fournisseur de fil pour machines textiles, comprenant un tambour fixe (TA) et un bras oscillant (VO) qui est supporté de manière pivotante sur l'axe du tambour et est relié opérationnellement, un moteur sans balais synchrone (M), à aimant permanent commandé par une unité de commande (UC) via une unité d'alimentation en énergie électronique pour enrouler des boucles de fil sur le tambour, ledit moteur (M, M') comprenant un stator (STA, STA') consistant en un logement creux, essentiellement cylindrique, et un rotor comprenant un élément magnétique ayant un profil circulaire avec des pôles alternés, qui est supporté coaxialement sur l'arbre menant (AM, AM') à proximité des bobines, **caractérisé en ce que** ledit logement creux possède neuf pièces polaires allongées, dont trois (E1-E3, E1'-E3') sont également espacées à 120° l'une de l'autre et supportent des bobines d'excitation respectives (A, B, C, A', B', C') enroulées dessus, les six pièces polaires restantes étant divisées en paires de pièces polaires côte à côte, dont chacune est disposée entre deux pièces polaires respectives équipées de bobines, et **en ce qu'**un capteur de Hall (H1-H3, H1', H3') est disposé à côté de l'élément magnétique dans l'interstice angulaire entre les pièces polaires de chacune desdites paires et est connecté pour envoyer des signaux de position à ladite unité de commande.

2. Fournisseur de fil selon la revendication 1, **caractérisé en ce que** ledit élément magnétique est constitué d'un cylindre à paroi mince (MC) fabriqué à partir d'un matériau magnétique radialement polarisé avec des pôles alternés et que lesdites pièces polaires (E1, E2, E3) ressortent radialement sur l'intérieur à partir du stator sur l'axe de rotation du stator.

3. Fournisseur de fil selon la revendication 1, **caractérisé en ce que** ledit élément magnétique est constitué d'un disque plat (D) fabriqué à partir d'un matériau magnétique qui est polarisé longitudinalement avec des pôles alternés dans le sens de son épaisseur, lesdites pièces polaires (E1'-E3', E1'b-E4'b) se projetant parallèlement à l'axe de rotation du rotor.

4. Fournisseur de fil selon l'une des revendications 1 à 3, **caractérisé en ce que** ledit élément magnétique possède quatre paires de pièces polaires.

5. Fournisseur de fil selon la revendication 4, **caractérisé en ce que** ledit élément magnétique possède un nombre de paires de pièces polaires qui est un multiple de quatre.

6. Fournisseur de fil selon l'une des revendications 1 à 3, **caractérisé en ce que** ledit élément magnétique possède cinq paires de pièces polaires.

7. Fournisseur de fil selon la revendication 6, **caractérisé en ce que** ledit élément magnétique possède un nombre de paires de pièces polaires qui est un multiple de cinq.
